# EUROPÄISCHE PATENTSCHRIFT

(11) **EP 3 429 874 B1**
(45) Veröffentlichungstag und Bekanntmachung des Hinweises auf die Patenterteilung: **02.12.2020**
(21) Anmeldenummer: 17704772.7
(22) Anmeldetag: 14.02.2017
(51) Int. Cl.: B60J 1/00, B60J 5/04, B60J 1/10

(54) **FAHRZEUGTÜR**
VEHICLE DOOR
PORTE DE VEHICULE

(30) Priorität: 18.03.2016 DE 202016001777 U
(43) Veröffentlichungstag der Anmeldung: 23.01.2019
(73) Patentinhaber: Gebr. Bode GmbH & Co. KG, 34123 Kassel (DE)
(72) Erfinder: AREND, Ulrich, 34576 Homburg (DE); LINNENKOHL, Lars, 34355 Staufenberg (DE)
(74) Vertreter: Patentanwälte Bauer Vorberg Kayser
(86) Internationale Anmeldenummer: PCT/EP2017/053228
(87) Internationale Veröffentlichungsnummer: WO 2017/157598

(56) Entgegenhaltungen:
- EP-A2- 0 304 694
- JP-U- S57 199 121
- US-A- 4 364 209
- US-A1- 2007 056 231

## Beschreibung

Die Erfindung betrifft eine Fahrzeugtür und insbesondere eine Fahrgasttür für ein Fahrzeug des öffentlichen Personenverkehrs mit den Merkmalen des Oberbegriffs von Anspruch 1.

Eine solche Fahrzeugtür findet sich ganz allgemein an Fahrzeugen und speziell an Fahrzeugen des öffentlichen Personenverkehrs wie z. B. Straßenbahnen, U-Bahnen, Regionalbahnen usw. Bei Fahrzeugen des öffentlichen Personenverkehrs sind Fahrgasttüren vorgesehen. Es handelt sich speziell um Fahrzeugtüren, welche einen Ein- und Ausstieg von Fahrgästen des Fahrzeugs ermöglichen. Solche Fahrzeugtüren weisen in der Regel neben einem Türrahmen, welcher regelmäßig im Wesentlichen aus Metall besteht und die Stützkonstruktion der Fahrzeugtür bildet, einen Fensterrahmen zur Aufnahme eines Fensters für die Fahrzeugtür auf. Daneben weist eine solche Fahrzeugtür auch regelmäßig Türbleche zum flächigen Abdecken des Türrahmens auf.

Aus dem Stand der Technik ist es bekannt, den zunächst separat zu dem Türrahmen ausgebildeten Fensterrahmen zwecks Befestigung an dem Türrahmen mit dem Türrahmen zu verschweißen.

Nachteilig an diesem Ansatz ist es, dass ein solcher Schweißvorgang verhältnismäßig arbeitsintensiv und daher teuer ist. Ebenso ist ein nachträgliches Lösen der Befestigung, beispielsweise für eine Reparatur o.dgl., aufwändig.

Die EP 0 304 694 A2 aus dem Stand der Technik beschreibt, dass bei einer fest einbaubaren Scheibe für Kraftfahrzeuge mit einer umlaufenden, unmittelbar an den Scheibenrand angespritzten Dichtung zur leichteren und automatisierbaren Montage vorgesehen ist, dass in vorgegebenen Abständen unmittelbar in die Dichtung elastische, schnappbare Einsätze teilweise eingebettet sind, die den zugeordneten Karosserieflansch einseitig im Schnappeingriff umfassen.

Die US 2007/0056231 A1 aus dem Stand der Technik, welche als nächstkommend angesehen wird, zeigt eine Montagevorrichtung, welche umfasst eine Basis, eine Stützfläche, die in einem festen Abstand zur Basis montiert ist und ein Eingriffselement mit einer Eingriffsfläche. Die Stützfläche ist eine Fläche eines Stützelements, ein Abschnitt der zweiten Fläche der Basis oder Kombinationen davon. Das Eingriffselement ist mit der Basis, dem Stützelement oder einer Kombination aus Basis und Stützelement verbunden. Das Eingriffselement ist unter einer Vorspannkraft in Richtung auf die Stützfläche in eine Eingriffsposition bewegbar.

Ausgehend von dem Stand der Technik besteht folglich die Aufgabe der Erfindung darin, eine Fahrzeugtür bereitzustellen, welche in der Herstellung einfacher und kostengünstiger ist.

Bezogen auf eine Fahrzeugtür mit den Merkmalen des Oberbegriffs von Anspruch 1 wird diese Aufgabe durch die Merkmale des kennzeichnenden Teils von Anspruch 1 gelöst.

Die vorschlagsgemäße Fahrzeugtür, bei welcher es sich insbesondere um eine Fahrgasttür für ein Fahrzeug des öffentlichen Personenverkehrs handeln kann, weist einen Fensterrahmen zur Aufnahme eines Fensters auf, wobei der Fensterrahmen mindestens ein Rahmenelement zur Aufnahme eines jeweiligen Fensterrands des Fensters aufweist. Die Fensterränder bilden also die Begrenzung des ebenen Fensters. Die vorschlagsgemäße Fahrzeugtür weist ebenso einen Türrahmen zur Aufnahme des Fensterrahmens auf, wobei der Türrahmen mindestens ein Türprofil aufweist und wobei das mindestens eine Rahmenelement jeweils ein Fensterprofil aufweist. Mit dem Begriff "Profil" allgemein und speziell mit den Begriffen Türprofil und Fensterprofil ist hier und nachfolgend ein jeweiliges Bauelement bzw. ein Teil eines Bauelements mit einer Längsausdehnung gemeint, wobei der Querschnitt des Profils entlang der Längsausdehnung zumindest abschnittsweise gleich ist. Insoweit der Türrahmen den Fensterrahmen in einer Ebene des Fensters - der Fensterebene - umgibt, weist der Türrahmen ein nach innen weisendes Türprofil und der Fensterrahmen ein nach außen weisendes Fensterprofil auf.

Bei der vorschlagsgemäßen Fahrzeugtür steht das mindestens eine Fensterprofil bezogen auf eine Bewegung in einer Löserichtung senkrecht zum vom jeweiligen Rahmenelement aufgenommenen Fensterrand formschlüssig mit einem jeweiligen Türprofil in Eingriff steht. Es steht also vorschlagsgemäß mindestens ein Türprofil mit einem entsprechenden Fensterprofil des mindestens einen Rahmenelements in Eingriff. Vorzugsweise entspricht die Anzahl der Rahmenelemente der Anzahl der Türprofile, sodass das Fensterprofil jedes Rahmenelements mit einem entsprechenden Türprofil des Türrahmens in Eingriff steht.

Die obige Löserichtung liegt in derjenigen Ebene, in welcher sich das Fenster erstreckt. Diese Ebene entspricht der obigen Fensterebene. Darüber hinaus ist diese Löserichtung senkrecht zu dem als linienartig gedachten Fensterrand angeordnet. Die spezielle Ausrichtung der Löserichtung entspricht dabei weiter derjenigen Richtung, welche das Fensterprofil von dem Türprofil wegführt, sodass also eine Bewegung des Rahmenelements in die Löserichtung zu einem Lösen von dem Türrahmen führen würde. Folglich ergibt sich für jeden speziellen Eingriff zwischen einem Fensterprofil und einem Türprofil eine zugeordnete Löserichtung. Der formschlüssige Eingriff des Fensterprofils mit dem Türprofil steht einer solchen Bewegung in Löserichtung dann vorschlagsgemäß grundsätzlich durch diesen Formschluss im Weg. Der formschlüssige Eingriff bezieht sich hier speziell auf den Eingriff zwischen dem Fensterprofil und dem Türprofil und nicht auf einen jeweiligen Formschluss mit weiteren Elementen wie z. B. Befestigungselementen.

Im Gegensatz zu dem Ansatz aus dem Stand der Technik ist es also vorschlagsgemäß weder eine stoffschlüssige Verbindung, welche ein Ablösen des Rahmenelements von dem Türrahmen verhindert, noch ein von dem Fensterprofil und Türprofil separates Befestigungselement wie z. B. eine Schraube. Eine solche formschlüssige Verbindung im Sinne des Vorschlags kann ohne eine Bearbeitung hergestellt werden, wie sie etwa für einen Stoffschluss erforderlich ist. Neben dem formschlüssigen Eingriff in Löserichtung kann ein Formschluss auch für Bewegungen in einigen oder allen anderen Richtungen zwischen dem Fensterprofil und dem Türprofil bestehen.

Vorschlagsgemäß bildet der formschlüssige Eingriff zwischen dem mindestens einen Fensterprofil und dem jeweiligen Türprofil eine Schnappverbindung. Eine solche Schnappverbindung lässt sich besonders einfach herstellen, z. B. durch Zusammenführen des mindestens einen Fensterprofils und des jeweiligen Türprofils, was einem Zusammenführen des Rahmenelements mit dem Türrahmen entspricht. Zumindest das Fensterprofil oder das Türprofil verformt sich bei einer solchen Schnappverbindung elastisch und verhakt sich anschließend mit dem jeweils anderen Verbindungspartner, sodass also die Elastizität des Fensterprofils und/oder des Türprofils zum Herstellen des formschlüssigen Eingriffs ausgenutzt wird. Hier kann es weiter sein, dass der formschlüssige Eingriff zwischen dem mindestens einen Fensterprofil und dem jeweiligen Türprofil eine unlösbare Schnappverbindung bildet. Das bedeutet, dass eine auf das Fensterprofil in Löserichtung wirkende Kraft keine derartige elastische Verformung des Türprofils bewirkt, welche den Formschluss aufheben könnte. Weiter ist es bevorzugt, dass der formschlüssige Eingriff zwischen dem mindestens einen Fensterprofil und dem jeweiligen Türprofil ein kraftformschlüssiger Eingriff ist. Dann liegt neben dem Formschluss auch ein Kraftschluss vor.

Die vorschlagsgemäße Fahrzeugtür ist dadurch gekennzeichnet, dass das mindestens eine Türprofil zueinander federnde Schnapphaken zum Hintergreifen von Vorsprüngen des jeweiligen Fensterprofils beim Herstellen des formschlüssigen Eingriffs umfasst oder dass das mindestens eine Fensterprofil zueinander federnde Schnapphaken zum Hintergreifen von Vorsprüngen des jeweiligen Türprofils beim Herstellen des formschlüssigen Eingriffs umfasst. Das bedeutet, dass die Schnapphaken sich durch ihre federnde Auslenkung annähern. Es kann auch sein, dass sowohl das Fensterprofil als auch das Türprofil Strukturen aufweisen, welche sowohl als Schnapphaken im vorliegenden Sinne als auch als Vorsprünge verstanden werden können. In so einem Fall kann also ein- und dieselbe Struktur einen Schnapphaken und einen Vorsprung bilden, was dann für die entsprechende Gegenstruktur ebenfalls gilt.

Gemäß einer bevorzugten Ausführungsform der vorschlagsgemäßen Fahrzeugtür ist vorgesehen, dass die Vorsprünge des mindestens einen Fensterprofils zur federnden Auslenkung beim Hintergreifen dieser Vorsprünge durch die jeweiligen Schnapphaken eingerichtet sind. Hier kann es sein, dass die Vorsprünge voneinander federn. Das bedeutet, dass die Vorsprünge sich durch die federnde Auslenkung voneinander entfernen. Eine Alternative zu dieser bevorzugten Ausführungsform sieht vor, dass die Vorsprünge des mindestens einen Türprofils zur federnden Auslenkung beim Hintergreifen dieser Vorsprünge durch die jeweiligen Schnapphaken eingerichtet sind. Dies stellt wiederum eine Vertauschung wie oben beschrieben dar, bei welcher es ebenfalls bevorzugt ist, dass die Vorsprünge voneinander federn.

Eine bevorzugte Ausführungsform der vorschlagsgemäßen Fahrzeugtür ist dadurch gekennzeichnet, dass die Vorsprünge und die Schnapphaken nach dem Herstellen des formschlüssigen Eingriffs im Wesentlichen in eine jeweilige Ruhestellung zurückfedern.

Eine weitere bevorzugte Ausführungsform der vorschlagsgemäßen Fahrzeugtür ist dadurch gekennzeichnet, dass die Schnapphaken jeweils eine Stoßfläche aufweisen und die Vorsprünge jeweils einen im Wesentlichen zu der Stoßfläche koplanaren Anschlag aufweisen, sodass durch den Eingriff zwischen dem Fensterprofil und dem Türprofil die Stoßfläche an dem jeweiligen Anschlag anliegt. Der Anschlag ist koplanar zu der Stoßfläche in dem Sinne, dass die beiden durch die jeweiligen Flächen definierten Ebene sich nicht schneiden, im analogen Sinne zur Parallelität bei Geraden. Die obige jeweils eine Stoßfläche weist vorzugsweise in Löserichtung, wobei diese Richtung durch die Normale auf die Stoßfläche definiert ist. Auf diese Weise kann das Zusammenfügen der Rahmenelemente mit dem Türrahmen ohne ein wesentliches Risiko einer Beschädigung der Fügeteile bewirkt werden. Auch hier kann ein- und dieselbe Struktur gleichermaßen als Stoßfläche wie als Anschlag im vorliegenden Sinne verstanden werden.

Gemäß einer bevorzugten Ausführungsform der vorschlagsgemäßen Fahrzeugtür ist vorgesehen, dass das mindestens eine Rahmenelement sich im Wesentlichen über eine gesamte Randlänge des jeweils aufgenommenen Fensterrands erstreckt. Hier kann es weiter sein, dass das Fensterprofil des mindestens einen Rahmenelements sich mindestens über eine halbe Randlänge des jeweils aufgenommenen Fensterrands erstreckt. Dies ermöglicht einen möglichst geschlossenen bzw. umlaufenden Fensterrahmen.

Eine bevorzugte Ausführungsform der vorschlagsgemäßen Fahrzeugtür ist dadurch gekennzeichnet, dass das mindestens eine Türprofil sich mindestens über eine halbe Randlänge desjenigen Fensterrands erstreckt, welcher Fensterrand von demjenigen Rahmenelement aufgenommen ist, dessen Fensterprofil mit dem mindestens einen Türprofil in Eingriff steht.

Eine weitere bevorzugte Ausführungsform der vorschlagsgemäßen Fahrzeugtür ist dadurch gekennzeichnet, dass der Türrahmen einen Türrahmenkörper zum Stützen des Fensterrahmens am Fahrzeug aufweist, welcher Türrahmenkörper einstückig mit einem jeweiligen Türprofil ausgeführt ist. Dabei kann der Türrahmenkörper selbst - wie unten noch beschrieben wird - mehrteilig sein. Diese bevorzugte Ausführungsform hat den Vorteil, dass das Profil für den formschlüssigen Eingriff bereits dem Element entspricht, welches gegenüber dem Fensterrahmen - und damit auch dem Fenster - eine tragende oder stützende Funktion hat. Eine bevorzugte Weiterentwicklung sieht vor, dass der Türrahmenkörper ein mit ihm einstückig ausgeführtes Außenprofil aufweist, welches gegenüber liegend zu dem Türprofil angeordnet ist und dem Fensterprofil entspricht. Auf diese Weise kann an dem Türrahmenkörper auch an seinem äußeren Umfang eine Verbindung hergestellt werden, welche im Wesentlichen der Verbindung zwischen dem Türrahmen und dem Fensterrahmen entspricht.

Gemäß einer bevorzugten Ausführungsform der vorschlagsgemäßen Fahrzeugtür ist vorgesehen, dass der Türrahmenkörper drei Körperelemente mit jeweils einem Türprofil zum Abschließen des Fensterrahmens an drei Seiten aufweist. Das jeweilige Türprofil ist dabei vorzugsweise mit dem Körperelement einstückig ausgeführt. Dabei kann es insbesondere sein, dass die Körperelemente im Wesentlichen in einer Rahmenebene angeordnet sind und dass benachbarte Körperelemente zueinander in einem Winkel von im Wesentlichen 90° angeordnet sind. Diese Rahmenebene kann dabei der obigen Fensterebene entsprechen. Körperelemente gelten in diesem Sinne als benachbart, wenn ihr kleinster Abstand zueinander geringer ist als der jeweils kleinste Abstand zu anderen Körperelementen.

Eine bevorzugte Ausführungsform der vorschlagsgemäßen Fahrzeugtür ist dadurch gekennzeichnet, dass die Körperelemente jeweils separat ausgeführt und benachbarte Körperelemente durch separate Befestigungsmittel und/oder durch einen jeweiligen Stoffschluss miteinander verbunden sind. Als Befestigungsmittel kommen hier insbesondere Niete und Schrauben in Betracht. Ein Stoffschluss im vorliegenden Sinne kann durch eine Schweiß- oder eine Klebeverbindung hergestellt werden.

Alternativ zu der obigen einstückigen Ausführung des Türprofils mit dem Türrahmenkörper ist bevorzugt vorgesehen, dass der Türrahmen einen Türrahmenkörper zum Stützen des Fensterrahmens am Fahrzeug sowie ein von dem Türrahmenkörper separates Profilelement umfasst, dass das Profilelement das mindestens eine Türprofil umfasst und mit diesem einstückig ausgeführt ist, dass das Profilelement mindestens ein dem Fensterprofil entsprechendes Außenprofil aufweist und der Türrahmenkörper ein dem Türprofil entsprechendes Innenprofil aufweist und dass das Innenprofil mit dem Außenprofil formschlüssig in Eingriff steht. Mit anderen Worten ist also ein separates Profilelement zwischen dem Türrahmenkörper und dem Fensterrahmen angeordnet. Solche Profilelemente können dann auch in größerer Zahl zwischen dem Türrahmenkörper und dem Fensterrahmen angeordnet werden, sodass basierend auf der selben Art der Verbindung eine Anpassung zwischen der Größe des Fensterrahmens und der Größe des Türrahmenkörpers vorgenommen werden kann.

Eine weitere bevorzugte Ausführungsform der vorschlagsgemäßen Fahrzeugtür ist dadurch gekennzeichnet, dass der Fensterrahmen mindestens drei Rahmenelemente aufweist, sodass mindestens drei Fensterränder des Fensters von jeweils einem Rahmenelement aufgenommen sind. Eine diesbezügliche bevorzugte Ausgestaltung sieht vor, dass die Rahmenelemente im Wesentlichen in der Rahmenebene angeordnet sind und dass benachbarte Rahmenelemente zueinander in einem Winkel von im Wesentlichen 90° angeordnet sind.

Es ist bevorzugt, dass die Rahmenelemente im Wesentlichen aus Metall bestehen. Alternativ oder zusätzlich kann der Türrahmen und insbesondere der Türrahmenkörper im Wesentlichen aus Metall bestehen. Dabei kommen auch Legierungen in Betracht. Bevorzugt ist weiter, dass das Metall Aluminium umfasst.

Weiter sieht eine bevorzugte Ausführungsform der vorschlagsgemäßen Fahrzeugtür vor, dass die Fahrzeugtür mindestens ein Türblech zur Befestigung an dem Türrahmen aufweist, sodass das an dem Türrahmen befestigte mindestens eine Türblech den Türrahmen und den Fensterrahmen im Wesentlichen vollständig abdeckt und eine jeweilige Fensteröffnung des mindestens einen Türblechs ein von dem Fensterrahmen aufgenommenes Fenster vorzugsweise im Wesentlichen vollständig freigibt.

Weitere Einzelheiten, Merkmale, Ziele und Vorteile der vorliegenden Erfindung werden nachfolgend anhand der Zeichnung eines bevorzugten Ausführungsbeispiels erläutert. In der Zeichnung zeigt
- Fig. 1: zeigt ein Ausführungsbeispiel einer vorschlagsgemäßen Fahrzeugtür in einer partiellen Draufsicht,
- Fig. 2: eine Teil-Schnittansicht der Fahrzeugtür der Fig. 1,
- Fig. 3a-c): eine Perspektivansicht der Fahrzeugtür der Fig. 1 und
- Fig. 4: eine weitere Perspektivansicht der Fahrzeugtür der Fig. 1 mit Tür-blechen.

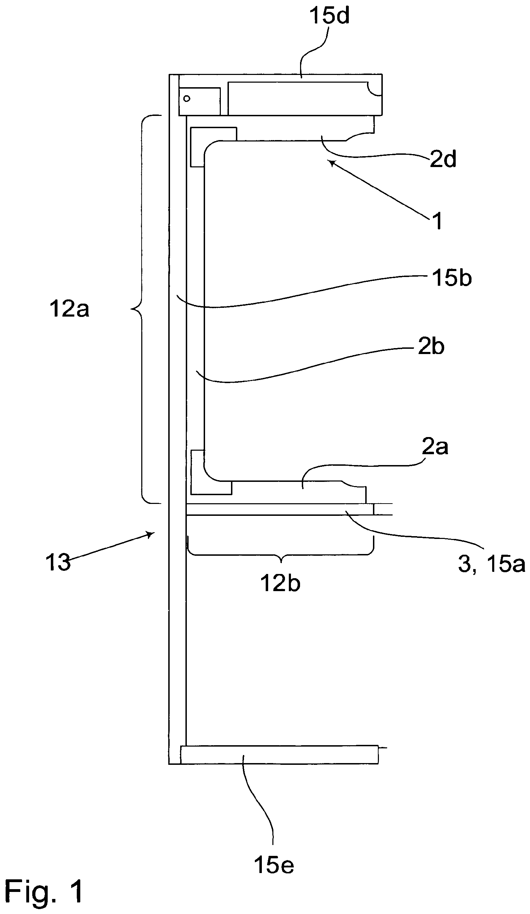

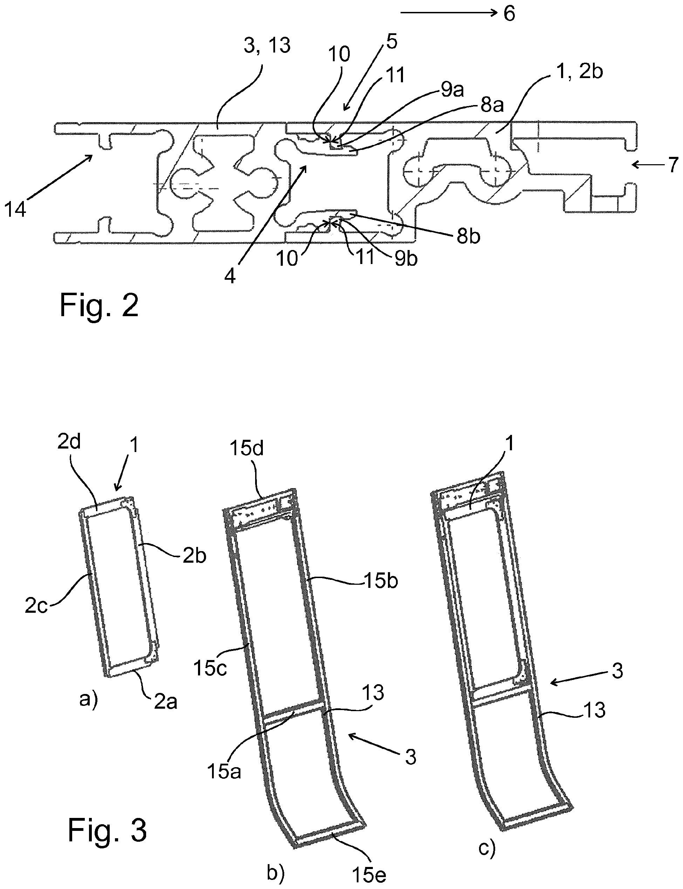

Bei der vorschlagsgemäßen Fahrzeugtür, welche in dem Ausführungsbeispiel der Fig. 1 partiell dargestellt ist, handelt es sich um eine Fahrgasttür für ein Fahrzeug des öffentlichen Personenverkehrs und speziell um eine Fahrgasttür für eine Untergrundbahn (auch als U-Bahn oder Metro bezeichnet). Erkennbar ist einerseits der Fensterrahmen 1 zur Aufnahme eines - hier an sich nicht dargestellten - Fensters. Von diesem Fensterrahmen sind in der Fig. 1 drei Rahmenelemente 2a,b,d zur Aufnahme eines jeweiligen Fensterrands des Fensters zu erkennen. Alle vier Rahmenelemente 2a-d des Fensterrahmens 1 sind in der Fig. 3 und speziell in der Fig. 3a dargestellt. Andererseits ist in der Fig. 1 auch der Türrahmen 3 zur Aufnahme des Fensterrahmens 1 teilweise dargestellt.

Das Türprofil 4 des Türrahmens 3 sowie das Fensterprofil 5 des Rahmenelements 2b sind in der Schnittansicht der Fig. 2 zu erkennen, in welcher auch die Löserichtung 6 eingetragen ist. Diese Löserichtung 6 steht senkrecht zu dem vom Rahmenelement 2b aufgenommenen Fensterrand, wobei weder dieser Fensterrand noch das entsprechende Fenster in der Fig. 2 dargestellt sind. Aus der Form und Lage der Fensteraufnahmeöffnung 7 ergibt sich aber ohne Weiteres die Lage des von dem Rahmenelement 2b aufgenommenen Fensterrands. Ebenso ist der formschlüssige Eingriff zwischen dem Fensterprofil 5 und dem Türprofil 4, welcher eine unlösbare Schnappverbindung bildet, in der Fig. 2 zu erkennen. Eine Lösebewegung des Fensterprofils 5 in Löserichtung 6 relativ zu dem Türprofil 4 wird durch den formschlüssigen Eingriff verhindert.

In dem dargestellten Ausführungsprofil weisen die drei Rahmenelemente 2a-c das Fensterprofil 5 auf. Entsprechend weist in dem Ausführungsbeispiel auch der Türrahmen 3 das Türprofil 4 dreifach auf, nämlich jeweils einmal für jedes Rahmenelement 2a-c zum Eingriff mit dem Fensterprofil 5 des jeweiligen Rahmenelements 2a-c. Insofern gilt also die Teil-Schnittansicht der Fig. 2 hinsichtlich des formschlüssigen Eingriffs des Fensterprofils 5 mit dem Türprofil 4 für die Rahmenelemente 2a-c und die entsprechenden Abschnitte des Türrahmens 3. Das Rahmenelement 2d weist in dem vorliegenden Ausführungsbeispiel kein Fensterprofil 5 auf und wird daher auf andere Art und Weise - auf welche es hier nicht ankommt - mit dem entsprechenden Abschnitt des Türrahmens 3 verbunden. Denkbar wäre ebenso, dass auch das Rahmenelement 2d ein Fensterprofil 4 und der entsprechende Abschnitt des Türrahmens 3 ein Türprofil 5 aufweist.

Ebenso in der Fig. 2 ist zu erkennen, dass das Türprofil 4 zueinander federnde Schnapphaken 8a, b aufweist, welche Schnapphaken 8a, b Vorsprünge 9a, b des Fensterprofils 5 hintergreifen. Bei diesem Hintergreifen federn die Vorsprünge 9a, b voneinander weg. Im Zustand des hergestellten formschlüssigen Eingriffs federn sowohl die Schnapphaken 8a, b als auch die Vorsprünge 9a, b im Wesentlichen - also zwar weit gehend, aber nicht ganz vollständig - in ihre jeweilige Ruhestellung zurück. Die Schnapphaken 8a, b weisen jeweils eine Stoßfläche 10 auf, welche im dargestellten Zustand des hergestellten formschlüssigen Eingriffs an einem jeweiligen Anschlag 11 der Vorsprünge 9a, b anliegen. Da speziell bei diesem Ausführungsbeispiel ein wechselseitiges Hintergreifen erfolgt, könnten aber im Prinzip auch die Vorsprünge 9a, b als solche Schnapphaken und die Schnapphaken 8a, b als Vorsprünge verstanden werden.

Aus der Zusammenschau der Fig. 1 mit den Fig. 3a und 3b geht weiter hervor, dass sich das Rahmenelement 2a, sein Fensterprofil 5 und das entsprechende Türprofil 4 im Wesentlichen über die gesamte Randlänge 12b - entsprechend der kürzeren Seite des rechteckartigen Fensterrahmens 1- des von dem Rahmenelement 2a aufgenommenen Fensterrands erstrecken. Die Rahmenelemente 2b,d ihre jeweiligen Fensterprofile 5 und die entsprechenden Türprofile 4 wiederum erstrecken sich im Wesentlichen über die gesamte Randlänge 12a des jeweils aufgenommenen Fensterrands, was der längeren Seite des rechteckartigen Fensterrahmens 1 entspricht.

Bei der Fahrzeugtür des Ausführungsbeispiels sind die drei Türprofile 4 des Türrahmens 3 - entsprechend den Rahmenelementen 2a-c des Fensterrahmens 1 - einstückig mit dem Türrahmenkörper 13 ausgeführt, also mit demjenigen Teil des Türrahmens 3, welcher den Fensterrahmen 1 am Fahrzeug stützt. Dieser Türrahmenkörper 13 ist als solcher in der Fig. 3b dargestellt. Prinzipiell könnten die Türprofile 4 auch als separate Bauteile an dem Türrahmenkörper 13 befestigt sein. Gegenüberliegend zu den Türprofilen 4, also bezogen auf den Fensterrahmen 1 nach außen weisend, weist der Türrahmenkörper 13 jeweils ein Außenprofil 14 auf, welches gemäß der Fig. 2 dem Fensterprofil 5 entspricht und welches ebenfalls einstückig mit dem Türrahmenkörper 13 ausgeführt ist.

Der Türrahmenkörper 13 des Ausführungsbeispiels weist insgesamt und wie in der Fig. 3b dargestellt vier Körperelemente 15a-d zum Abschließen des Fensterrahmens 1 auf, wobei die drei Körperelemente 15a-c das jeweils einstückig mit dem Körperelement ausgeführte Türprofil 4 aufweisen. Ebenso weist der Türrahmenkörper 13 noch ein weiteres Körperelement 15e auf, welches aber nicht den Fensterrahmen 1 abschließt und hier nicht weiter von Belang ist.

Die Körperelemente 15a-d zum Abschließen des Fensterrahmens 1 liegen in einem Winkel von jeweils 90° zueinander in einer Ebene, welche als Rahmenebene bezeichnet wird und welche auch der Fensterebene entspricht - also derjenigen Ebene, in welcher auch das von dem Fensterrahmen 1 aufgenommene Fenster liegt. Jeweils benachbarte Körperelemente 15a-d zum Abschließen des Fensterrahmens 1 sind miteinander verschraubt, wobei auch eine Schweiß- oder eine Klebeverbindung in Betracht käme. Auch die Rahmenelemente 2a-d sind in dieser Rahmenebene angeordnet, wobei ebenfalls jeweils benachbarte Rahmenelemente 2a-d einen Winkel von 90° bilden. Sowohl der Türrahmenkörper 13 als auch der Fensterrahmen 1 insgesamt bestehen aus einer Aluminiumlegierung.

Bei einer bevorzugten Reihenfolge der Herstellung der Fahrzeugtür des Ausführungsbeispiels werden zunächst und gemäß der Darstellung der Fig. 3a die Rahmenelemente 2a-d zum Bilden des Fensterrahmens 1 zur Aufnahme des Fensters miteinander verbunden, wobei hier die Rahmenelemente 2a-d beispielhaft untereinander durch nicht näher beschriebene Verbindungsmittel verbunden werden. Anschließend wird der Fensterrahmen 1 in den Türrahmen 3 unter Herstellung der jeweiligen formschlüssigen Eingriffe zwischen den Fensterprofilen 5 und den Türprofilen 4 eingebracht. Dabei ist der Türrahmen 3 regelmäßig an mindestens einer Seite und vorzugsweise an zwei Seiten offen. Nach dem Einbringen des Fensterrahmens 1 wird der Türrahmen 3 geschlossen, sodass der in der Fig. 3c dargestellte Zustand eintritt. Die Fig. 3b zeigt dabei nur zur Verdeutlichung den geschlossenen Türrahmen 3 ohne Fensterrahmen 1.

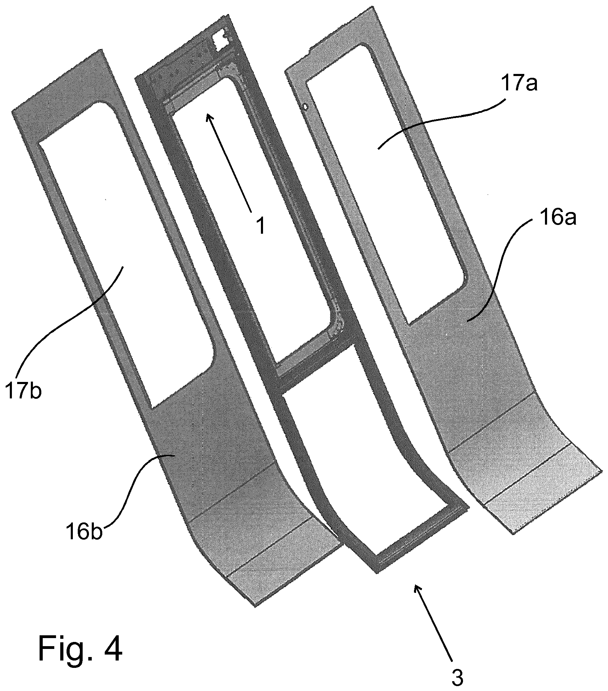

Als weiteren Verfahrensschritt zeigt die Fig. 4 die Anordnung von Türblechen 16a, b. Speziell weist die Fahrzeugtür des Ausführungsbeispiels zwei Türbleche 16a, b auf, welche an dem Türrahmen 3 befestigt werden. Dabei bedecken sie den Türrahmen 3 und den Fensterrahmen 1 vollständig, geben aber das von dem Fensterrahmen 1 aufgenommene Fenster weitgehend durch ihre jeweilige Fensteröffnung 17a, b frei.

## Patentansprüche

1. Fahrzeugtür, insbesondere Fahrgasttür für ein Fahrzeug des öffentlichen Personenverkehrs, mit einem Fensterrahmen (1) zur Aufnahme eines Fensters, wobei der Fensterrahmen (1) mindestens ein Rahmenelement (2a-c) zur Aufnahme eines jeweiligen Fensterrands des Fensters aufweist, und mit einem Türrahmen (3) zur Aufnahme des Fensterrahmens (1), wobei der Türrahmen (3) mindestens ein Türprofil (4) aufweist, wobei das mindestens eine Rahmenelement (2a-c) jeweils ein Fensterprofil (5) aufweist, wobei das mindestens eine Fensterprofil (5) bezogen auf eine Bewegung in einer Löserichtung (6) senkrecht zum vom jeweiligen Rahmenelement (2a-c) aufgenommenen Fensterrand formschlüssig mit einem jeweiligen Türprofil (4) in Eingriff steht, **dadurch gekennzeichnet, dass** die Löserichtung (6) in derjenigen Ebene liegt, in welcher sich das Fenster erstreckt, wobei der formschlüssige Eingriff zwischen dem mindestens einen Fensterprofil (5) und dem jeweiligen Türprofil (4) eine Schnappverbindung bildet, wobei das das mindestens eine Türprofil (4) zueinander federnde Schnapphaken (8a, b) zum Hintergreifen von Vorsprüngen (9a, b) des jeweiligen Fensterprofils (5) beim Herstellen des formschlüssigen Eingriffs umfasst oder dass das mindestens eine Fensterprofil (5) zueinander federnde Schnapphaken zum Hintergreifen von Vorsprüngen des jeweiligen Türprofils (4) beim Herstellen des formschlüssigen Eingriffs umfasst.

2. Fahrzeugtür nach Anspruch 1, **dadurch gekennzeichnet, dass** der formschlüssige Eingriff zwischen dem mindestens einen Fensterprofil (5) und dem jeweiligen Türprofil (4) eine unlösbare Schnappverbindung bildet, vorzugsweise, dass der formschlüssige Eingriff zwischen dem mindestens einen Fensterprofil (5) und dem jeweiligen Türprofil (4) ein kraftformschlüssiger Eingriff ist.

3. Fahrzeugtür nach Anspruch 1 oder 2, **dadurch gekennzeichnet, dass** die Vorsprünge (9a, b) des mindestens einen Fensterprofils (5) zur insbesondere voneinander federnden Auslenkung beim Hintergreifen dieser Vorsprünge (9a, b) durch die jeweiligen Schnapphaken (8a, b) eingerichtet sind oder dass die Vorsprünge des mindestens einen Türprofils (4) zur insbesondere voneinander federnden Auslenkung beim Hintergreifen dieser Vorsprünge durch die jeweiligen Schnapphaken eingerichtet sind.

4. Fahrzeugtür nach Anspruch 3, **dadurch gekennzeichnet, dass** die Vorsprünge (9a, b) und die Schnapphaken (8a, b) nach dem Herstellen des formschlüssigen Eingriffs im Wesentlichen in eine jeweilige Ruhestellung zurückfedern.

5. Fahrzeugtür nach einem der Ansprüche 1 bis 4, **dadurch gekennzeichnet, dass** die Schnapphaken (8a, b) jeweils eine, vorzugsweise in Löserichtung (6) weisende, Stoßfläche (10) aufweisen und die Vorsprünge (9a, b) jeweils einen im Wesentlichen zu der Stoßfläche (10) koplanaren Anschlag (11) aufweisen, sodass durch den Eingriff zwischen dem Fensterprofil (5) und dem Türprofil (4) die Stoßfläche (10) an dem jeweiligen Anschlag (11) anliegt.

6. Fahrzeugtür nach einem der Ansprüche 1 bis 5, **dadurch gekennzeichnet, dass** das mindestens eine Rahmenelement (2a- d) sich im Wesentlichen über eine gesamte Randlänge (12a, b) des jeweils aufgenommenen Fensterrands erstreckt, insbesondere, dass das Fensterprofil (5) des mindestens einen Rahmenelements (2a-d) sich mindestens über eine halbe Randlänge (12a, b) des jeweils aufgenommenen Fensterrands erstreckt.

7. Fahrzeugtür nach einem der Ansprüche 1 bis 6, **dadurch gekennzeichnet, dass** das mindestens eine Türprofil (4) sich mindestens über eine halbe Randlänge (12a, b) desjenigen Fensterrands erstreckt, welcher Fensterrand von demjenigen Rahmenelement (2a-d) aufgenommen ist, dessen Fensterprofil (5) mit dem mindestens einen Türprofil (4) in Eingriff steht.

8. Fahrzeugtür nach einem der Ansprüche 1 bis 7, **dadurch gekennzeichnet, dass** der Türrahmen (3) einen Türrahmenkörper (13) zum Stützen des Fensterrahmens (1) am Fahrzeug aufweist, welcher Türrahmenkörper (13) einstückig mit einem jeweiligen Türprofil (4) ausgeführt ist, vorzugsweise, dass der Türrahmenkörper (13) ein mit ihm einstückig ausgeführtes Außenprofil (14) aufweist, welches gegenüber liegend zu dem Türprofil (4) angeordnet ist und dem Fensterprofil (5) entspricht.

9. Fahrzeugtür nach einem der Ansprüche 1 bis 8, **dadurch gekennzeichnet, dass** der Türrahmenkörper (13) drei Körperelemente (15a-c) mit jeweils einem vorzugsweise mit dem Körperelement (15a-c) einstückig ausgeführten Türprofil (4) zum Abschließen des Fensterrahmens (1) an drei Seiten aufweist, insbesondere, vorzugsweise, dass die Körperelemente (15a-c) im Wesentlichen in einer Rahmenebene angeordnet sind und dass benachbarte Körperelemente (15a-c) zueinander in einem Winkel von im Wesentlichen 90° angeordnet sind.

10. Fahrzeugtür nach Anspruch 9, **dadurch gekennzeichnet, dass** die Körperelemente (15a-c) jeweils separat ausgeführt und benachbarte Körperelemente (15a- c) durch separate Befestigungsmittel und/oder durch einen jeweiligen Stoffschluss miteinander verbunden sind.

11. Fahrzeugtür nach einem der Ansprüche 1 bis 10, **dadurch gekennzeichnet, dass** der Türrahmen (3) einen Türrahmenkörper (13) zum Stützen des Fensterrahmens (1) am Fahrzeug sowie ein von dem Türrahmenkörper (13) separates Profilelement umfasst, dass das Profilelement das mindestens eine Türprofil (4) umfasst und mit diesem einstückig ausgeführt ist, dass das Profilelement mindestens ein dem Fensterprofil (5) entsprechendes Außenprofil aufweist und der Türrahmenkörper (13) ein dem Türprofil (4) entsprechendes Innenprofil aufweist und dass das Innenprofil mit dem Außenprofil formschlüssig in Eingriff steht.

12. Fahrzeugtür nach einem der Ansprüche 1 bis 11, **dadurch gekennzeichnet, dass** der Fensterrahmen (1) mindestens drei Rahmenelemente (2a-c) aufweist, sodass mindestens drei Fensterränder des Fensters von jeweils einem Rahmenelement (2a-c) aufgenommen sind, vorzugsweise, dass die Rahmenelemente (2a-c) im Wesentlichen in der Rahmenebene angeordnet sind und dass benachbarte Rahmenelemente (2a-c) zueinander in einem Winkel von im Wesentlichen 90° angeordnet sind.

13. Fahrzeugtür nach einem der Ansprüche 1 bis 12, **dadurch gekennzeichnet, dass** die Rahmenelemente (2a-c) und/oder der Türrahmen (3), insbesondere der Türrahmenkörper (13) im Wesentlichen aus Metall, vorzugsweise umfassend Aluminium, besteht.

14. Fahrzeugtür nach einem der Ansprüche 1 bis 13, **dadurch gekennzeichnet, dass** die Fahrzeugtür mindestens ein Türblech (16a, b) zur Befestigung an dem Türrahmen (3) aufweist, sodass das an dem Türrahmen (3) befestigte mindestens eine Türblech (16a, b) den Türrahmen (3) und den Fensterrahmen (1) im Wesentlichen vollständig abdeckt und eine jeweilige Fensteröffnung (17a, b) des mindestens einen Türblechs (16a, b) ein von dem Fensterrahmen (1) aufgenommenes Fenster vorzugsweise im Wesentlichen vollständig freigibt.

## Claims

1. A vehicle door, in particular a passenger door for a public transport vehicle, with a window frame (1) for accommodating a window, wherein the window frame (1) has at least one frame member (2a-c) for accommodating a respective window edge of the window, and with a door frame (3) for accommodating the window frame (1), wherein the door frame (3) has at least one door profile (4), wherein the at least one frame member (2a-c) has one window profile (5) each, wherein the at least one window profile (5) is positively engaged with a respective door profile (4) with respect to a movement in a release direction (6) perpendicular to the window edge accommodated by the respective frame member (2a-c), **characterized in that** the release direction (6) is situated in the plane in which the window extends, wherein the positive engagement between the at least one window profile (5) and the respective door profile (4) forms a snap-in connection, wherein the at least one door profile (4) comprises snap-in hooks (8a, b), which move resiliently towards each other, for grasping behind projections (9a, b) of the respective window profile (5) when establishing the positive engagement, or that the at least one window profile (5) comprises snap-in hooks, which move resiliently towards each other, for grasping behind projections of the respective door profile (4) when establishing the positive engagement.

2. The vehicle door according to claim 1, **characterized in that** the positive engagement between the at least one window profile (5) and the respective door profile (4) forms a non-detachable snap-in connection, preferably, that the positive engagement between the at least one window profile (5) and the respective door profile (4) is a frictionally positive engagement.

3. The vehicle door according to claim 1 or 2, **characterized in that** the projections (9a, b) of the at least one window profile (5) are adapted for being deflected, particularly in a manner moving resiliently away from each other, when the respective snap-in hooks (8a, b) grasp behind these projections (9a, b), or that the projections of the at least one door profile (4) are adapted for being deflected, particularly in a manner moving resiliently away from each other, when the respective snap-in hooks grasp behind these projections.

4. The vehicle door according to claim 3, **characterized in that** the projections (9a, b) and the snap-in hooks (8a, b) substantially move back resiliently into a respective rest position after the positive engagement has been established.

5. The vehicle door according to any one of the claims 1 to 4, **characterized in that** the snap-in hooks (8a, b) each have one abutting surface (10) preferably facing in the release direction (6), and the projections (9a, b) each have one stop (11) substantially coplanar with the abutting surface (10), so that the abutting surface (10) abuts against the respective stop (11) due to the engagement between the window profile (5) and the door profile (4).

6. The vehicle door according to any one of the claims 1 to 5, **characterized in that** the at least one frame member (2a-d) extends substantially over an entire edge length (12a, b) of the respectively accommodated window edge, particularly that the window profile (5) of the at least one frame member (2a-d) extends at least over half an edge length (12a, b) of the respectively accommodated window edge.

7. The vehicle door according to any one of the claims 1 to 6, **characterized in that** the at least one door profile (4) extends at least over half an edge length (12a, b) of the window edge, which window edge is accommodated by that frame member (2a-d) whose window profile (5) is in engagement with the at least one door profile (4).

8. The vehicle door according to any one of the claims 1 to 7, **characterized in that** the door frame (3) has a door frame body (13) for supporting the window frame (1) on the vehicle, which door frame body (13) is integrally configured with a respective door profile (4), preferably, that the door frame body (13) has an external profile (14) configured integrally therewith, which is disposed opposite the door profile (4) and corresponds to the window profile (5).

9. The vehicle door according to any one of the claims 1 to 8, **characterized in that** the door frame body (13) has three body members (15a-c) with one door profile (4) each, which is preferably integrally configured with the body member (15a-c), for closing off the window frame (1) on three sides, particularly, that the body members (15a-c), preferably, are substantially disposed in a frame plane and that adjacent body members (15a-c) are disposed at an angle to each other of substantially 90°.

10. The vehicle door according to claim 9, **characterized in that** the body members (15a-c) are each configured separately, and adjacent body members (15a-c) are connected to each other by separate fastening means and/or by a respective substance-to-substance connection.

11. The vehicle door according to any one of the claims 1 to 10, **characterized in that** the door frame (3) has a door frame body (13) for supporting the window frame (1) on the vehicle, and a profile member separate from the door frame body (13), that the profile member includes the at least one door profile (4) and is configured integrally therewith, that the profile member has at least one external profile corresponding to the window profile (5) and the door frame body (13) has an internal profile corresponding to the door profile (4), and that the internal profile is in positive engagement with the external profile.

12. The vehicle door according to any one of the claims 1 to 11, **characterized in that** the window frame (1) has at least three frame members (2a-c), so that at least three window edges of the window are each accommodated by one frame member (2a-c), preferably, that the frame members (2a-c) are substantially disposed in the frame plane and that adjacent frame members (2a-c) are disposed at an angle to each other of substantially 90°.

13. The vehicle door according to any one of the claims 1 to 12, **characterized in that** the frame members (2a-c) and/or the door frame (3), particularly the door frame body (13), substantially consist of metal, preferably including aluminum.

14. The vehicle door according to any one of the claims 1 to 13, **characterized in that** the vehicle door has at least one door panel (16a, b) for attachment to the door frame (3), so that the at least one door panel (16a, b) attached to the door frame (3) covers the door frame (3) and the window frame (1) substantially completely, and a respective window opening (17a, b) of the at least one door panel (16a, b) substantially completely exposes a window accommodated by the window frame (1).

## Revendications

1. Porte de véhicule, en particulier porte de passager pour un véhicule de transport en commun de passagers, avec un cadre de fenêtre (1) destiné à recevoir une fenêtre, dans laquelle ledit cadre de fenêtre (1) présente au moins un élément de cadre (2a-c) destiné à recevoir un bord de fenêtre respectif de la fenêtre, et avec un cadre de porte (3) destiné à recevoir le cadre de fenêtre (1), dans laquelle le cadre de porte (3) présente au moins un profilé de porte (4), ledit au moins un élément de cadre (2a-c) comprenant chacun un profilé de fenêtre (5), ledit au moins un profilé de fenêtre (5) étant en prise à engagement positif avec un profilé de porte (4) respectif, par rapport à un mouvement dans une direction de libération (6) perpendiculaire au bord de fenêtre reçu par l'élément de cadre (2a-c) respectif, **caractérisée par le fait que** la direction de libération (6) se trouve dans le plan dans lequel s'étend la fenêtre, la prise à engagement positif entre ledit au moins un profilé de fenêtre (5) et ledit profilé de porte (4) respectif formant une liaison par encliquetage, ledit au moins un profilé de porte (4) comprenant des crochets à enclenchement (8a, b) élastiques les uns par rapport aux autres pour s'engager derrière des saillies (9a, b) du profilé de fenêtre (5) respectif lors de la réalisation de la prise à engagement positif ou que ledit au moins un profilé de fenêtre (5) comprend des crochets à enclenchement élastiques les uns par rapport aux autres pour s'engager derrière des saillies du profilé de porte (4) respectif lors de la réalisation de la prise à engagement positif.

2. Porte de véhicule selon la revendication 1, **caractérisée par le fait que** la prise à engagement positif entre ledit au moins un profilé de fenêtre (5) et le profilé de porte (4) respectif forme une liaison par encliquetage non amovible, de préférence que la prise à engagement positif entre ledit au moins un profilé de fenêtre (5) et le profil de porte (4) respectif est une prise par adhérence et à engagement positif.

3. Porte de véhicule selon la revendication 1 ou 2, **caractérisée par le fait que** les saillies (9a, b) dudit au moins un profilé de fenêtre (5) sont conçues pour la déviation en particulier élastique les unes par rapport aux autres lorsque les crochets à enclenchement (8a, b) respectifs se prennent derrière ces saillies (9a, b) ou que les saillies dudit au moins un profilé de porte (4) sont conçues pour la déviation en particulier élastique les unes par rapport aux autres lorsque les crochets à enclenchement respectifs se prennent derrière ces saillies.

4. Porte de véhicule selon la revendication 3, **caractérisée par le fait que** les saillies (9a, b) et les crochets à enclenchement (8a, b) reviennent élastiquement pour l'essentiel dans une position de repos respective après que la prise à engagement positif a été réalisée.

5. Porte de véhicule selon l'une quelconque des revendications 1 à 4, **caractérisée par le fait que** les crochets à enclenchement (8a, b) présentent chacun une surface de butée (10) montrant de préférence dans la direction de libération (6), et que les saillies (9a, b) présentent chacune une butée (11) qui est coplanaire pour l'essentiel par rapport à la surface de butée (10) de sorte que la surface de butée (10) s'appuie sur la butée (11) respective en raison de la prise entre le profilé de fenêtre (5) et le profilé de porte (4).

6. Porte de véhicule selon l'une quelconque des revendications 1 à 5, **caractérisée par le fait que** ledit au moins un élément de cadre (2a-d) s'étend pour l'essentiel sur toute une longueur de bord (12a, b) du bord de fenêtre respectivement reçu, en particulier que le profilé de fenêtre (5) dudit au moins un élément de cadre (2a-d) s'étend au moins sur une demi-longueur de bord (12a, b) du bord de fenêtre respectivement reçu.

7. Porte de véhicule selon l'une quelconque des revendications 1 à 6, **caractérisée par le fait que** ledit au moins un profilé de porte (4) s'étend au moins sur une demi-longueur de bord (12a, b) du bord de fenêtre lequel bord de fenêtre est reçu par l'élément de cadre (2a-d) dont le profilé de fenêtre (5) est en prise avec ledit au moins un profilé de porte (4).

8. Porte de véhicule selon l'une quelconque des revendications 1 à 7, **caractérisée par le fait que** le cadre de porte (3) présente un corps de cadre de porte (13) pour supporter le cadre de fenêtre (1) sur le véhicule, lequel corps de cadre de porte (13) est réalisé d'un seul tenant avec un profilé de porte (4) respectif, de préférence que le corps de cadre de porte (13) présente un profilé extérieur (14) qui est réalisé d'un seul tenant avec lui et qui est disposé en étant en regard du profilé de porte (4) et correspond au profilé de fenêtre (5).

9. Porte de véhicule selon l'une quelconque des revendications 1 à 8, **caractérisée par le fait que** le corps de cadre de porte (13) comprend trois éléments de corps (15a-c) ayant chacun un profilé de porte (4) réalisé de préférence d'un seul tenant avec l'élément de corps (15a-c) et destiné à fermer le cadre de fenêtre (1) sur trois côtés, en particulier, de préférence, que les éléments de corps (15a-c) sont disposés pour l'essentiel dans un plan de cadre et que des éléments de corps (15a-c) adjacents sont disposés les uns par rapport aux autres à un angle de 90° pour l'essentiel.

10. Porte de véhicule selon la revendication 9, **caractérisée par le fait que** les éléments de corps (15a-c) sont réalisés chacun séparément et que des éléments de corps (15a-c) adjacents sont reliés entre eux par des moyens de fixation séparés et/ou par une liaison de matière respective.

11. Porte de véhicule selon l'une quelconque des revendications 1 à 10, **caractérisée par le fait que** le cadre de porte (3) comprend un corps de cadre de porte (13) pour supporter le cadre de fenêtre (1) sur le véhicule ainsi qu'un élément de profilé séparé du corps de cadre de porte (13), que l'élément de profilé comprend ledit au moins un profilé de porte (4) et est réalisé d'un seul tenant avec celui-ci, que l'élément de profilé présente au moins un profil extérieur correspondant au profilé de fenêtre (5) et que le corps de cadre de porte (13) présente un profilé intérieur correspondant au profilé de porte (4) et que le profilé intérieur est en prise à engagement positif avec le profil extérieur.

12. Porte de véhicule selon l'une quelconque des revendications 1 à 11, **caractérisée par le fait que** le cadre de fenêtre (1) comprend au moins trois éléments de cadre (2a-c) de sorte qu'au moins trois bords de fenêtre de la fenêtre sont reçus chacun par un élément de cadre (2a-c), de préférence que les éléments de cadre (2a-c) sont disposés pour l'essentiel dans le plan de cadre et que des éléments de cadre (2a-c) adjacents sont disposés les uns par rapport aux autres à un angle de 90°.

13. Porte de véhicule selon l'une quelconque des revendications 1 à 12, **caractérisée par le fait que** les éléments de cadre (2a-c) et/ou le cadre de porte (3), en particulier le corps de cadre de porte (13) sont réalisés pour l'essentiel à partir de métal, de préférence comprenant de l'aluminium.

14. Porte de véhicule selon l'une quelconque des revendications 1 à 13, **caractérisée par le fait que** la porte de véhicule comprend au moins un panneau de porte (16a, b) pour la fixation au cadre de porte (3) de sorte que ledit au moins un panneau de porte (16a, b) fixé au cadre de porte (3) couvre pour l'essentiel complètement le cadre de porte (3) et le cadre de fenêtre (1) et qu'une ouverture de fenêtre (17a, b) respective dudit au moins un panneau de porte (16a, b) découvre de préférence pour l'essentiel complètement une fenêtre reçue par le cadre de fenêtre (1).
